# EUROPEAN PATENT SPECIFICATION

(11) **EP 3 813 316 B1**
(45) Date of publication and mention of the grant of the patent: **12.03.2025**
(21) Application number: 19205273.6
(22) Date of filing: 25.10.2019
(51) Int. Cl.: H04L 9/40, G06F 21/54, H04L 67/02

(54) **WEB SERVER CIRCUIT, METHOD AND COMPUTER PROGRAM FOR PREVENTING PARASITE ATTACKS**
WEBSERVER-SCHALTUNG, VERFAHREN UND COMPUTERPROGRAMM ZUM VERHINDERN VON PARASITENANGRIFFEN
CIRCUIT DE SERVEUR WEB, PROCÉDÉ ET PROGRAMME INFORMATIQUE POUR EMPÊCHER DES ATTAQUES DE PARASITES

(43) Date of publication of application: 28.04.2021
(73) Proprietor: Fraunhofer-Gesellschaft zur Förderung der angewandten Forschung e.V., 80686 München (DE)
(72) Inventor: SHULMAN, Haya, 64295 Darmstadt (DE); WAIDNER, Michael, 64295 Darmstadt (DE)
(74) Representative: 2SPL Patentanwälte PartG mbB

(56) References cited:
- EP-A1- 2 849 110
- EP-A1- 3 010 201
- US-A1- 2012 023 156

## Description

### Field

Examples relate to web-based client/server applications.

### Background

Many security-critical web applications use objects that are stored in a cache after loading by a web browser to increase efficiency. If the same web browser later opens a page from the same domain, a saved object is generally not reloaded from the web server, but the saved object is used.

A new class of attacks, named parasite attacks, exploit this property by storing a manipulated, malicious object of the same name in the web browser cache for the domain to be attacked. When the web browser opens the domain to be attacked, the malicious object is loaded and executed. This allows sensitive data to be tapped or manipulated by the attacker.

In principle, web servers are able to indicate that caching is not desired, but web browsers do not have to consider this signal. There is currently no reliable protection against these attacks.

Document US 2012/0023156 A1 relates to a Server-client System. A Server provides a Web Site a function to record access logs using Web beacon technology, and a Client terminal communicating with the Server includes a browser to execute JavaScript by dynamically embedding a 1-pixel Image that is dynamically added with a random parameter to a Source of a <img> tag element in a <div> tag element.

Hence, there is a need for a method to prevent storing of malicious objects in a cache.

### Summary

This demand is addressed by the subject-matter of the independent claims. Further useful embodiments are addressed by the dependent claims.

An example relates to a web server circuit for preventing parasite attacks being configured to transmit an object to the client upon request of a service from a client. The object is identified by a first name. The web server circuit is further configured to transmit the object to the client upon a further request of the service from the client, where the object is identified by a second name.

By use of a second name for the same object to be transmitted from the web server circuit to the client, it may be impossible for an attacker to store a malicious object in a cache of the client having the same second name. In this way, the parasite attacks may be avoided.

In another example, the second name is generated by the web server circuit.

An automatically generated second name for the object by the web server circuit provides a name being unpredictable for the attacker.

In a further example, generating the second name is performed by use of an algorithm for random names.

An algorithm for generating randomly chosen names raises the difficulty for the attacker to find out the name.

In an optional example, the generated second name has a pre-defined minimum number of digits.

The more digits of the second name of the object are randomly generated by the web server circuit, the more effort needs to be spend by the attacker to find out the name, which leads to an even higher security for the client.

In another example, the object being transmitted to the client is temporarily saved in a cache of the client.

The object is saved in the cache as long as it is needed for a corresponding application or program. Once the object might not be needed any more for the client, said object may be deleted from the cache.

In a further example, the objects are data being processed by a CPU of the client.

The CPU of the client may directly process the transmitted data in order to execute a program, where said data are needed.

In an example, the object comprises a code to be executed by the client.

The CPU of the client may also generate or execute an algorithm which may be needed for a certain application or program.

Another example relates to a method for preventing parasite attacks, comprising transmitting an object to the client, wherein the object is identified by a first name. The method further comprises transmitting the object to the client, wherein the object is identified by a second name.

In another example, the method for preventing parasite attacks further comprises generating the second name.

An automatically generated second name for the object by the web server circuit may provide a name being unpredictable for the attacker.

A further example relates to a computer program for having a program code for, when executed by a programmable processor, performing the method for preventing parasite attacks.

### Brief description of the Figures

Some examples of apparatuses and/or methods will be described in the following by way of example only, and with reference to the accompanying figures, in which
Fig. 1 shows a schematic illustration of a client and a web server; and
Fig. 2 illustrates a flow chart describing the method for preventing parasite attacks.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

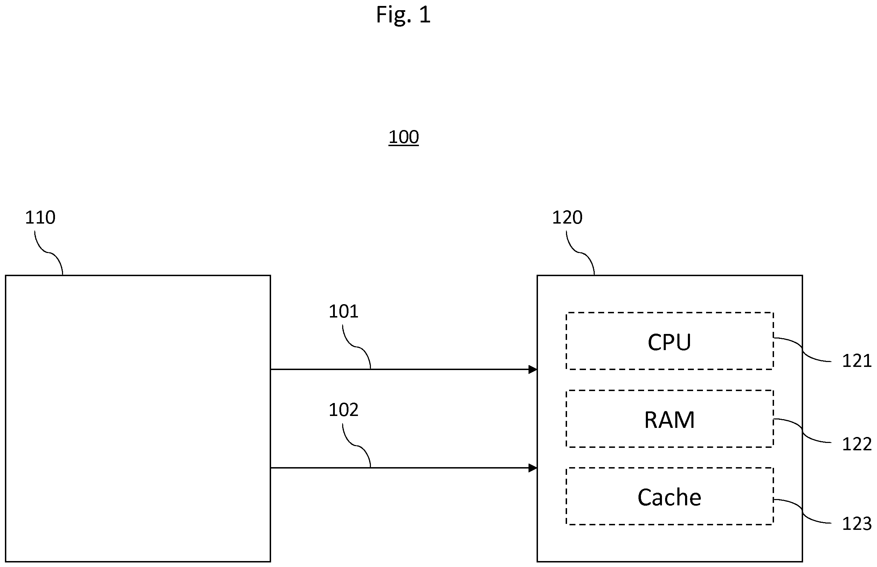

Fig. 1 describes a web server circuit 110 and a client 120. The web server circuit which may prevent parasite attacks may be configured to transmit an object to the client upon request 101 of a service from a client 120. The object may be identified by a first name. The web server circuit 110 may further be configured to transmit the object to the client 120 upon a further request 102 of the service from the client 120. The object may be identified by a second name.

The client 120 may be a computer which may include a central processing unit (CPU) 121, random access memory (RAM) 122 and a cache 123. An object may be received by the client 120 from the web server circuit 110 and temporarily saved in the cache 123. The

Such a client 120 may, for example, request a service from the web server circuit 110. Said service may be opening a web site including images, videos, GIFs, browser games or any other kind of content which may be saved in a cache 123 of, for example, a web browser. In all of the examples, objects may be transmitted in order to save them temporarily in the cache 123 in order to open them again after restarting or reloading a web site in a much faster way.

In case the client 120 may request the same service a second time, the web server circuit 110 may generate a new name for the same object to be transmitted to the client 120. This may happen by use of an algorithm for generating random names which may be unpredictable for a potential attacker who wants store malicious objects in the clients' 120 cache. Renaming the object may prevent such parasite attacks efficiently.

Especially in case of a website, a web browser may save objects in the cache while opening a web site for the very first time. After closing the web site or after closing the web browser, the objects may remain in the cache 123 for a certain time. In case the same web site might be opened again some time later, the web site may be loaded or opened in a much faster time than opening or loading it for the first time, due to the fact that the most important objects may be directly loaded from the cache 123.

This principle is not limited to web sites and web browsers. It may also be used in different clients like game clients providing a gaming platform, video on demand clients, music streaming clients or navigation systems. These examples are not limited to computer use only; they may also be used with smart phones, TV's, tablets, smart watches, gaming consoles and electrical household appliances or cars including a computer system connected to the internet.

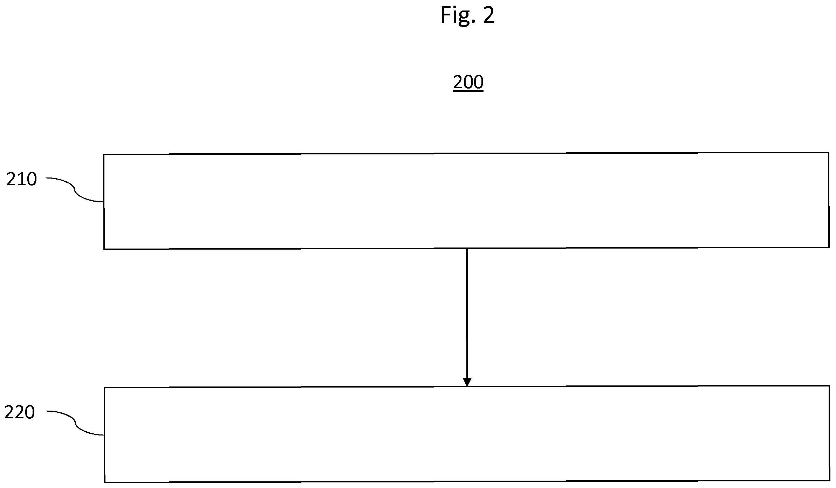

Fig. 2 describes a method for preventing parasite attacks. The method may include transmitting an object to the client. The object may be identified by a first name. The method may further comprise transmitting the object to the client 120, wherein the object may be identified by a second name.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended.

## Claims

1. A web server circuit (110) for preventing parasite attacks configured to:
upon a request (101) of a service from a client (120), transmit an object to the client (120), the object being identified by a first name; and
upon a further request (102) of the service from the client (120), generate a second name and transmit the object to the client (120), the object being identified by the second name.

2. The web server circuit (110) of claim 1, wherein generating the second name is performed by use of an algorithm for random names.

3. The web server circuit (110) of claim 1 or 2, wherein the generated second name has a pre-defined minimum number of digits.

4. The web server circuit (110) of any one of claims 1 to 3, wherein the objects being transmitted to the client (120) is temporarily saved in a cache (123) of the client (120).

5. The web server circuit (110) of any one of claims 1 to 4, wherein the objects are data being processed by a CPU (121) of the client (120).

6. The web server circuit (110) of any one of the preceding claims, wherein the object comprises a code to be executed by the client (120).

7. A method (200) performed by a web server circuit
for preventing parasite attacks, comprising:
upon a request (101) of a service from a client (120), transmitting (210) an object to the client, the object being identified by a first name; and
upon a further request (102) of the service from the client (120), generating a second name and transmitting (220) the object to the client, the object being identified by the second name.

8. A computer program comprising a program code with instructions which, when executed by a programmable processor, cause the programmable processor to perform the method of claim 7.

## Patentansprüche

1. Eine Web-Server-Schaltung (110) zum Verhindern von Parasitenangriffen, die ausgebildet ist, um:
bei einer Anforderung (101) eines Dienstes von einem Client (120) ein Objekt an den Client (120) zu übertragen, wobei das Objekt durch einen ersten Namen identifiziert wird; und
bei einer weiteren Anforderung (102) des Dienstes von dem Client (120) einen zweiten Namen zu erzeugen und das Objekt an den Client (120) zu übertragen, wobei das Objekt durch den zweiten Namen identifiziert wird.

2. Die Web-Server-Schaltung (110) gemäß Anspruch 1, wobei das Erzeugen des zweiten Namens durch Verwendung eines Algorithmus für zufällige Namen durchgeführt wird.

3. Die Web-Server-Schaltung (110) gemäß Anspruch 1 oder 2, wobei der erzeugte zweite Name eine vordefinierte minimale Anzahl von Stellen aufweist.

4. Die Web-Server-Schaltung (110) gemäß einem der Ansprüche 1 bis 3, wobei die Objekte, die an den Client (120) übertragen werden, vorübergehend in einem Cache (123) des Clients (120) gespeichert werden.

5. Die Web-Server-Schaltung (110) gemäß einem der Ansprüche 1 bis 4, wobei die Objekte Daten sind, die durch eine CPU (121) des Clients (120) verarbeitet werden.

6. Die Web-Server-Schaltung (110) gemäß einem der vorangehenden Ansprüche, wobei das Objekt einen Code aufweist, der durch den Client (120) auszuführen ist.

7. Ein Verfahren (200), das durch eine Web-Server-Schaltung durchgeführt wird, zum Verhindern von Parasitenangriffen, umfassend:
bei einer Anforderung (101) eines Dienstes von einem Client (120), Übertragen (210) eines Objekts an den Client, wobei das Objekt durch einen ersten Namen identifiziert wird; und
bei einer weiteren Anforderung (102) des Dienstes von dem Client (120), Erzeugen eines zweiten Namens und Übertragen (220) des Objekts an den Client, wobei das Objekt durch den zweiten Namen identifiziert wird.

8. Ein Computerprogramm, umfassend einen Programmcode mit Anweisungen, die, wenn sie durch einen programmierbaren Prozessor ausgeführt werden, den programmierbaren Prozessor veranlassen, das Verfahren gemäß Anspruch 7 durchzuführen.

## Revendications

1. Circuit de serveur web (110) pour empêcher des attaques parasitaires, configuré pour :
lors d'une demande (101) d'un service par un client (120), transmettre un objet au client (120), l'objet étant identifié par un premier nom ; et
lors d'une autre demande (102) du service par le client (120), générer un deuxième nom et transmettre l'objet au client (120), l'objet étant identifié par le deuxième nom.

2. Circuit de serveur web (110) selon la revendication 1, dans lequel la génération du deuxième nom est effectuée par l'utilisation d'un algorithme pour des noms aléatoires.

3. Circuit de serveur web (110) selon la revendication 1 ou 2, dans lequel le deuxième nom généré a un nombre minimum prédéfini de chiffres.

4. Circuit de serveur web (110) selon l'une des revendications 1 à 3, dans lequel les objets qui sont transmis au client (120) sont temporairement sauvegardés dans un cache (123) du client (120).

5. Circuit de serveur web (110) selon l'une des revendications 1 à 4, dans lequel les objets sont des données qui sont traitées par une CPU (121) du client (120).

6. Circuit de serveur web (110) selon l'une des revendications précédentes, dans lequel l'objet comprend un code à exécuter par le client (120).

7. Procédé (200) effectué par un circuit de serveur web pour empêcher des attaques parasitaires, comprenant :
lors d'une demande (101) d'un service par un client (120), transmettre (210) un objet au client, l'objet étant identifié par un premier nom ; et
lors d'une autre demande (102) du service par le client (120), générer un deuxième nom et transmettre (220) l'objet au client, l'objet étant identifié par le deuxième nom.

8. Programme d'ordinateur comprenant un code de programme avec des instructions qui, lorsqu'elles sont exécutées par un processeur programmable, amènent le processeur programmable à effectuer le procédé selon la revendication 7.
